# EUROPEAN PATENT SPECIFICATION

(11) **EP 4 259 395 B1**
(45) Date of publication and mention of the grant of the patent: **01.07.2026**
(21) Application number: 21823906.9
(22) Date of filing: 08.12.2021
(51) Int. Cl.: B27K 3/52, C09K 21/12, C09K 21/04, B05D 7/06, C09K 21/06

(54) **NON-HALOGEN FIRE-RETARDANT COMPOSITION AND USE OF SAID COMPOSITION FOR DIRECT AND INDIRECT FIRE PROTECTION LAYERS ON SUBSTRATES**
HALOGENFREIE BRANDSCHUTZZUSAMMENSETZUNG UND VERWENDUNG DIESER ZUSAMMENSETZUNG FÜR DIREKTE UND INDIREKTE BRANDSCHUTZSCHICHTEN AUF SUBSTRATEN
COMPOSITION IGNIFUGE NON HALOGÉNÉE ET UTILISATION DE LADITE COMPOSITION POUR DES COUCHES DE PROTECTION CONTRE LE FEU DIRECTES ET INDIRECTES SUR DES SUBSTRATS

(30) Priority: 09.12.2020 BE 202005898
(43) Date of publication of application: 18.10.2023
(73) Proprietor: Ecochem International NV, 2550 Olen (BE)
(72) Inventor: WIEHN, Helmut, 76831 Heuchelheim (DE); DAESELEIRE, Pieter, 2250 Olen (BE)
(74) Representative: Brantsandpatents bv
(86) International application number: PCT/EP2021/084728
(87) International publication number: WO 2022/122795

(56) References cited:
- WO-A1-2018/122406
- CN-A- 102 757 754
- CN-A- 108 659 760
- US-A- 3 934 066
- US-A1- 2004 266 303
- US-B2- 9 669 564

## Description

The claimed invention relates to an improved method for imparting fire-retardancy on wood- and cellulose-based materials that are to be employed in the production of furniture and in interior building construction, e.g. wood-based materials, such as lumber (timber) and engineered wood, such as plywood, densified wood, fiberboard (e.g. medium-density fiberboard (MDF) or high-density fiberboard (HDF)), particle board (PB), oriented strand board (OSB), laminated timber, parallel strand lumber (PSL), laminated strand lumber (LSL) and oriented strand lumber (OSL), glued laminated timber (glulam), and laminated veneer lumber (LVL), as well as materials used in decorative interior finishing, such as decorative panels. Such materials hereafter also are referred to as "substrates". The invention also relates to an intumescent carrier for laminating onto a wood or natural fiber-based board.

### [Description]

### [Technical Field]

The present invention provides an improved method for imparting fire-retardancy on wood- and cellulose-based materials that are to be employed in the production of furniture and in interior building construction, e.g. wood-based materials, such as lumber (timber) and engineered wood, such as plywood, densified wood, fiberboard (e.g. medium-density fiberboard (MDF) or high-density fiberboard (HDF)), particle board (PB), oriented strand board (OSB), laminated timber, parallel strand lumber (PSL), laminated strand lumber (LSL) and oriented strand lumber (OSL), glued laminated timber (glulam), and laminated veneer lumber (LVL), as well as materials used in decorative interior finishing, such as decorative panels. The invention also provides an intumescent carrier for laminating onto a wood or natural fiber-based board.

### [Technical Background]

Wood- and cellulose-based materials are widely used as construction materials and in the construction of furniture. Furthermore, decorative panels are commonly employed in the construction of furniture and in decorative interior finishing. From the aspect of safety in the case of fire, the materials have to satisfy high fire-retardancy standards.

The European standard DIN EN 13823 is widely accepted for comparing the fire-retardant properties of different materials. Somewhat older methods which nevertheless yield reliable results are ISO 5658-2 (2006) and UNI 9174 (2010). Based on these methods, classifications can be assigned to the materials (e.g. Euroclass according to DIN EN 13501-1 (2019-05)).

When following the Euroclass system, the classification of combustible materials, such as wood- and cellulose-based materials, e.g. wood-based panels and compact boards, is based on the results of a Single Burning Item (SBI) Test according to DIN EN 13823. Classification parameters of the SBI test are the fire growth rate index *(FIGRA),* the lateral flame spread (*LFS*)*,* the total heat release (*THR*₆₀₀ₛ), Smoke Growth Rate (SMOGRA) and Total Smoke Production (TSP). The FIGRA and THR indexes are the main factors on which the Euroclass rating depends.

To increase their fire-retardancy, wood- and cellulose-based materials can be treated with fire-retardant compositions and intumescent compositions. Fire-retardant compositions may slow the spread of a fire by absorbing energy that would otherwise serve the perpetuation of the combustion process. Intumescent compositions swell under the influence of heat to form a voluminous foam layer (intumescent char) that serves to insulate the substrate against heat, thereby slowing down pyrolysis of the substrate. Furthermore, the intumescent char prevents oxygen from contacting the substrate, thereby inhibiting combustion.

Typical intumescent compositions contain an acid donor, a carbon donor and a blowing agent. Upon exposure to heat, the acid donor decomposes to release an acid. The acid, in turn, catalyzes carbonization of the carbon donor to form a carbon layer, as well as decomposition of the blowing agent to release an inert gas. The inert gas acts to expand the carbon skeleton formed by carbonization of the carbon donor, thereby creating the intumescent char. As suitable acid donors, phosphates are known. As carbon donors, polyhydric alcohols or sugars may be employed. As blowing agent, nitrogenous compounds, such as dicyandiamide, melamine, urea or guanidine have been employed. Compositions using melamine as a blowing agent are known, for example, from US 2012/0295996 A1, US 6,989,113 B1 and WO 2018/122406 A1.

From environmental and economic standpoints it is desirable and advantageous to formulate water-based intumescent compositions, preferably compositions that are non-halogen. However, issues of solubility and compatibility have to be dealt with when trying to prepare such compositions.

Different methods have been described for the treatment of substrates, such as wood-based materials, e.g. wood-based panels or compact boards, with fire-retardant additives. A prevalent method involves the addition of fire-retardant additives to wood raw materials (e.g. strips, chips or fibers) prior to the formation of compressed panels, as described, for example, in DE 103 61 878 A1, EP 2 586 849 A2 and WO 2018/122406 A1. However, in such a method, large amounts of active agents are required, as the active agents ultimately are contained in the whole volume of the finished product. Furthermore, raw materials that have been treated using an aqueous solution may be vulnerable to subsequent leaching of the active agents. Finally, issues of compatibility between the active agents and adhesives or resins used for forming a product from the treated raw materials may also arise.

A fire-retardant may be added as a granulate to wood particles in a case of preparing particle boards or added as a liquid suspension, dispersion or solution to fibers in a case of preparing fiberboards or oriented strand boards. In such cases, too, the compatibility between the active agents and the adhesive(s) may be an issue, and it is still necessary to employ large amounts of active agents.

Non-patent document 1 describes the use of a flame-retardant adhesive resin consisting of a mixture of ammonium polyphosphate (APP), pentaerythritol (PER) and a melamine-urea-formaldehyde resin (MUF) for preparing a flame-retardant decorated (FRD) plywood.

As far as wood and cellulose-based substrates are concerned, little attention seems to have been paid to the application of fire-retardant and intumescent compositions as external coatings. In particular the treatment of such substrates with aqueous compositions does not seem to have been studied extensively. However, an example of an aqueous intumescent composition for coating substrates is described in WO 99/35196 A1.

Intumescent coatings that are based on mixtures of melamine-formaldehyde resins and partial phosphoric acid esters have been described in the literature, e.g., in DE 43 07 406 A1 and WO 99/35196 A1. Since partial phosphoric acid esters are comparably expensive, however, it would be desirable to find a means for lowering the use amount thereof or to be able to replace them altogether while maintaining adequate intumescent properties. Moreover, the application of a protective topcoat is recommended when applying coatings prepared using phosphoric acid esters, thereby adding further effort and costs. Avoiding the use of partial phosphoric acid esters also would be advantageous in view of their high degree of acidity.

In addition to potential compatibility issues, a method of applying a fire-retardant or an intumescent coating onto the surface of a substrate faces the obstacle of ensuring that the coating will not be overly deteriorated by handling operations and/or exposure to the elements. That is to say, contrary to a fire-retardant that is added to a raw material during the production process of a wood-based material, a fire-retardant or an intumescent composition that takes on the form of a coating needs to exhibit not only adequate stability, but also sufficient durability.

US 3,934,066 discloses a method of imparting fire-retardancy on a wood- material by laminating with an intumescent carrier. The intumescent carrier is a porous paper, which can be kraft paper.

### Non-patent document 1:

Wu M, Song W, Wu Y, Qu W. "Preparation and Characterization of the Flame Retardant Decorated Plywood Based on the Intumescent Flame Retardant Adhesive" Materials (Basel). 2020 Feb 3; 13(3):676. doi: 10.3390/ma13030676. PMID: 32028679; PMCID: PMC7040706.

### Objective

The present inventors have sought to address the issues discussed above and to provide a means for imparting fire-retardancy on substrates, such as wood- and cellulose-based materials that are to be employed in the production of furniture and in interior building construction and on materials used in decorative interior finishing, that is more effective than previous means, without having to make any sacrifices in regard to the fire-retardant and physical properties of the treated product.

Accordingly, it is an objective of the present invention to provide an improved method for imparting fire-retardancy on wood- and cellulose-based materials. A further objective is to provide an improved intumescent carrier.

### Summary of the Invention

The claimed invention solves the identified problems by means of a method for imparting fire-retardancy according to claim 1 and an improved intumescent carrier according to claim 10.

By making use of an aqueous fire-retardant composition (B), an aqueous intumescent composition (C) and the method for imparting fire-retardancy on a substrate as described in the following, materials exhibiting excellent fire-retardant properties can be obtained using only small amounts of active agents. In particular, the claimed invention achieves a notable reduction in the amounts of fire-retardants that are required for achieving a certain reaction-to-fire performance, such as a certain classification level in the Euroclass system, when compared to traditional methods and compositions. For example, the amounts of fire-retardants employed in preparing wooden composite boards of low flammability typically is on the order of 70-80 kg/m³, whereas the claimed invention only requires a fraction of this amount in order to attain comparable properties. This reduction in the required amounts of fire-retardants represents an improvement not only from an economic standpoint, but also from an ecological point of view. In addition, the composition is halogen-free. These compositions are generally considered safer, non-toxic and do not accumulate in the environment or in organisms.

Furthermore, by relying on a process of coating, rather than addition to a raw material, it becomes possible to separate the process of manufacturing the substrate from the process of treating the substrate with a fire-retardant. Thereby, a need to operate at low temperatures and to employ long pressing times when producing materials such as fire-retardant wood-based panels can be eliminated and productivity can be increased. Finally, the composition and method of the present invention make it possible to obtain a coating that is sufficiently stable and durable to allow for the use of the treated product in interior construction applications, thereby eliminating the need for applying an additional overcoating.

### [Detailed Description]

### [Aqueous resin solution (A)]

In the claimed invention, as an aqueous resin solution (A), aqueous melamine-formaldehyde resin solutions, aqueous melamine-urea-formaldehyde resin solutions, mixtures thereof and mixtures thereof with aqueous urea-formaldehyde resin solutions and/or aqueous phenol-formaldehyde resin solutions may be used.

The resin component contained in the aqueous resin solution (A) has dual functionality. On the one hand, the resin acts as a binder, which makes possible the formation of a stable coating. On the other hand, the melamine contained in the aqueous resin solution (A) acts as a blowing agent upon exposure to heat and thereby participates in the intumescent action of the coating. The dual functionality of the resin component makes it possible to eliminate the use of a polyvinyl acetate (PVA)/acrylate mixture, which previously has commonly been employed as a binder for intumescent compositions. Thus, a reduction of the overall number of components contained in the treated substrate is achieved and the probability of encountering incompatibilities among the components is lowered. Furthermore, it has been found that a melamine-based coating is more durable and resilient than a PVA-based coating.

Surprisingly, the present inventors have found that an intumescent coating exhibiting superior properties can be prepared using an aqueous resin composition. The reason therefore is believed to lie in the fact that, rather than being dispersed in the form of solid melamine particles having a comparatively large size in the mm or µm range, as is the case in commonly employed fire-retardant compositions, the melamine components are dissolved and thus exists in the form of solute particles having a size that is one or more orders of magnitude smaller than that of solid resin particles. The existence in dissolved form and the reduction in particle size that is associated therewith not only allow for a better distribution of the resin in the intumescent composition, but ultimately also serve to increase the reactivity of the intumescent coating, because the resin component exhibits a greater reaction surface and is more evenly distributed.

A further advantage resulting from the use of a melamine or melamine component solution, rather than a solid, lies in the fact that the acid donor (b) and carbon donor (c) will be encased by the resin during curing, thereby locking them into position, protecting them from any disturbances and cementing the homogeneous distribution of the components.

By ultimately being reflected in the intumescent coating, the homogeneous distribution of components that exists in the resin solution (A) makes possible the increased and more homogeneous reactivity that is observed when comparing the effectiveness of an intumescent coating as described herein to that of other intumescent coatings. In comparison to the prior art, the increased uniformity in the distribution of components allows the coating amount to be reduced while at the same time making possible the formation of an intumescent char that exhibits better structure and stability, thereby improving the overall fire-retardant properties of the treated substrate.

Aqueous melamine-formaldehyde resin solutions, aqueous melamine-urea-formaldehyde resin solutions, aqueous urea-formaldehyde resin solutions and aqueous phenol-formaldehyde resin solutions to be incorporated into the aqueous resin solution (A) can be obtained from the respective raw materials, i.e. melamine, formaldehyde, urea, and phenol, by methods commonly employed in the art, e.g. a method as described in EP 0 767 214 A1, wherein an aqueous mixture of the individual components is reacted to yield the resin solution and, if necessary, the solids content of the resin solution is adjusted by the further addition or removal of water.

Alternatively, commercially available resin powders or resin solutions may be used for preparing the aqueous resin solution (A). Examples of commercially available resin powders and aqueous resin solutions which may be used in the present invention include, but are not limited to, Kaurit^{®} (urea-formaldehyde type produced by BASF), Kauramin^{®} (melamine-formaldehyde and melamine-urea-formaldehyde type produced by BASF), Bakelite^{®} (phenol-formaldehyde type produced by Hexion GmbH), and Madurit^{®} (melamine-formaldehyde type produced by Prefere Resins).

The aqueous resin solution (A) as used in the claimed invention exhibits a total melamine content of from 20 to 45 wt.%, preferably from 25 to 35 wt.%, relative to the total weight of the aqueous resin solution (A). When the melamine content lies in this range, it is possible to form a uniform and stable coating using an aqueous intumescent composition (C) as described further below, thereby allowing excellent fire-retardant properties to be achieved while also allowing the coating to exhibit good durability and mechanical stability. When preparing the aqueous resin solution from the respective raw materials, the melamine content can be adjusted by varying the amount of melamine that is employed in the reaction. When employing commercially available resin powders or resin solutions, the melamine content thereof generally will be determined by the supplier. However, if necessary, it also is possible to determine a melamine content by a method as described in the database of the German Federal Institute for risk assessment (BfR)("Methodensammlung Papier, Karton und Pappe", Section 5: ".Bestimmung von Einzelsubstanzen", Subsection 5.3 "Melamin"; https://www.bfr.bund.de/cm/343/melamin-aus-melamin-formaldehydharz.pdf; accessed on November 17, 2020; also Frind, H.; Hensel, R.; Pommer, W: 3.4.1 Melamin aus Melamin-Formaldehydharz. In: Methoden zur Untersuchung von Papieren, Kartons und Pappen für Lebensmittelverpackungen. Göttingen: Erich Goltze 1982).

From the viewpoint of ease of handling and manipulation, the aqueous resin solution (A) preferably exhibits a solids content (a_{A}) of from 45 to 75 wt.%, more preferably from 50 to 70 wt.% and even more preferably from 55 to 65 wt.% relative to the total weight of the aqueous resin solution (A). The solids content is determined according to DIN 53216-1 (1989).

From the viewpoint of avoiding brittleness and/or improving the transparency of the coating, the aqueous resin solution (A) preferably is
- a mixture of an aqueous melamine-formaldehyde (MF) resin solution with an aqueous phenol-formaldehyde (PF) resin solution,
- a mixture of an aqueous melamine-formaldehyde (MF) resin solution with an aqueous urea-formaldehyde (UF) resin solution, or
- a mixture of an aqueous melamine-formaldehyde (MF) resin solution with an aqueous phenol-formaldehyde (PF) resin solution and a urea-formaldehyde (UF) resin.

In all of these cases, the mass ratio of a solids content (a_{MF}) derived from the aqueous melamine-formaldehyde resin to a solids content (a_{X}) derived from all resin components other than the aqueous melamine-formaldehyde resin is preferably from 2:1 to 10:1, more preferably from 3:1 to 9:1 and even more preferably from 4:1 to 8:1.

### [Acid donor (b) and carbon donor (c)]

Examples of the acid donor (b) used in the claimed invention include ammonium polyphosphate, guanylurea phosphate, guanidine phosphate and mixtures thereof. One or more selected from the group consisting of ammonium polyphosphate, guanylurea phosphate and guanidine phosphate, and preferably one or more selected from the group consisting of ammonium polyphosphate and guanidine phosphate are used as the acid donor (b). This is done from the viewpoint of maximizing the fire-retardancy of the coating, while at the same time avoiding the use of compounds exhibiting a high degree of acidity. The use of the indicated compounds also is believed to minimize health and environmental risks.

Examples of the carbon donor (c) used in the claimed invention include glucose, arabinose and other monosaccharides; lactose, maltose and other disaccharides; starch, cellulose, dextrin and other polysaccharides; sorbitol, erythritol, pentaerythritol, dipentaerythritol, tripentaerythritol, mannitol and other polyhydric alcohols; and mixtures thereof. Preferably one or more selected from the group consisting of starch, cellulose, dextrin and other polysaccharides; sorbitol, erythritol, pentaerythritol, dipentaerythritol, tripentaerythritol, mannitol and other polyhydric alcohols, and mixtures thereof are used as the carbon donor (c). From the viewpoint of achieving a homogenous distribution of components, the carbon donor (c) more preferably is one or more selected from the group consisting of sorbitol, erythritol, pentaerythritol, dipentaerythritol, tripentaerythritol, mannitol and mixtures thereof, and even more preferably is one or more selected from the group consisting of sorbitol, pentaerythritol and dipentaerythritol. The use of the indicated compounds also is believed to minimize health and environmental risks.

The acid donor (b) and the carbon donor (c) typically are employed in the form of particulate powders, wherein at least 90% of the particles present have a particle size which is smaller than 100 µm, and preferably at least 90% of the particles have a particle size of less than 50 µm or at least 50% of the particles have a particle size of less than 10 µm. The average particle size of the powders can be determined by a laser diffraction method (ISO 13320 (2019)).

In the method and compositions of the claimed invention, the acid donor (b) and the carbon donor (c) are used at a mass ratio of acid donor (b) to carbon donor (c), (b):(c), of from 10:1 to 1:1, preferably from 8:1 to 1:1, more preferably from 6:1 to 1:1; even more preferably from 6:1 to 2:1, and most preferably from 5:1 to 3:1. When the mass ratio of acid donor (b) to carbon donor (c), (b):(c), falls within such a range, it is possible to form a uniform and stable coating using an aqueous fire-retardant composition (B) or an aqueous intumescent composition (C) as described further below, thereby allowing excellent fire-retardant properties to be achieved.

### [Method for imparting fire-retardancy]

The method for imparting fire-retardancy on a wood- or cellulose-based material that is to be employed in the production of furniture, interior building construction or decorative interior finishing, the method comprises the following steps (1) and (2) of:
(1) introducing an acid donor (b) and a carbon donor (c) into an aqueous resin solution (A) to obtain an aqueous intumescent composition (C), wherein
   the aqueous resin solution (A) is selected from the group consisting of aqueous melamine-formaldehyde resin solutions, aqueous melamine-urea-formaldehyde resin solutions, mixtures thereof and mixtures thereof with aqueous urea-formaldehyde resin solutions and/or aqueous phenol-formaldehyde resin solutions; wherein
   the aqueous resin solution (A) exhibits a total melamine content of from 20 to 45 wt.%, preferably from 25 to 35 wt.% relative to the total weight of the aqueous resin solution (A);
   the acid donor (b) is selected from the group consisting of ammonium polyphosphate, guanylurea phosphate, guanidine phosphate and mixtures thereof;
   the carbon donor (c) is selected from the group consisting of glucose, arabinose and other monosaccharides, lactose, maltose and other disaccharides, starch, cellulose, dextrin and other polysaccharides, sorbitol, erythritol, pentaerythritol, dipentaerythritol, tripentaerythritol, mannitol or other polyhydric alcohols and mixtures thereof;
   the mass ratio of acid donor (b) to carbon donor (c), (b):(c), introduced into the aqueous resin solution (A) is in a range of from 10:1 to 1:1, preferably from 8:1 to 1:1, and more preferably from 6:1 to 1:1; and
   the acid donor (b) and the carbon donor (c) are introduced into the aqueous resin solution (A) in such an amount that a mass ratio of the solids content (a_{A}) of the aqueous resin solution (A), as determined according to DIN 53216, to the total amount of acid donor (b) and carbon donor (c), (a_{A}):((b)+(c)), is in a range of from 0.25:1 to 5:1, preferably from 0.30:1 to 2.5:1;
   the aqueous intumescent composition (C) exhibits a solids content (ac) of from 50 to 80 wt.%, preferably from 60 to 75 wt.%, relative to the total weight of the aqueous intumescent composition (C);
   a step (2B) of laminating one or more layers of an intumescent carrier and a decorative paper onto the wood- or cellulose-based material in the named order,
   wherein the intumescent carrier comprises a kraft paper or a matting made of glass or other fibers that has been subjected to coating with the aqueous intumescent composition (C).

### [Preparation of aqueous intumescent composition (C)]

In step (1) of the method for imparting fire-retardancy on a wood- or cellulose-based material that is to be employed in the production of furniture, interior building construction or decorative interior finishing, the acid donor (b) and the carbon donor (c) are introduced into the aqueous resin solution (A) to obtain an aqueous intumescent composition (C).

Prior to their introduction into the aqueous resin solution (A), the acid donor (b) and the carbon donor (c) can be dispersed or suspended in water to form an aqueous fire-retardant composition (B). When doing so, the acid donor (b) and the carbon donor (c) can be added to the water separately or together. Subsequently, the aqueous fire-retardant composition (B) is added to the aqueous resin solution (A). As an alternative thereto, the acid donor (b) and the carbon donor (c) can be introduced into the aqueous resin solution (A) as particulate powders.

Water can be added simultaneously with or subsequently to the introduction of the fire-retardant component into the aqueous resin solution (A) in order to adjust the concentration of the components and/or the solids content of the aqueous intumescent composition (C) to a level desired for the intended field of application and the intended means for applying the intumescent composition (C).

When separately introducing the acid donor (b), the carbon donor (c) and, optionally, additional water, into the aqueous resin solution (A), this can be done simultaneously or successively.

The aqueous intumescent composition (C) is obtained as a result of the introduction of the acid donor (b) and the carbon donor (c) into the aqueous resin solution (A).

In order to attain a homogenous distribution of components, the aqueous resin solution (A) may be stirred during the introduction of the acid donor (b) and the carbon donor (c) or the addition of the aqueous fire-retardant composition (B). A type of mixer commonly employed in the art, such as a dispersion mixer or a propeller mixer may suitably be used for such stirring.

When the aqueous fire-retardant composition (B) is formed by introducing the acid donor (b) and the carbon donor (c) into water prior to introduction into the aqueous resin solution (A), then this is preferably done while stirring the water using a dispersion mixer. In this case, too, the introduction of the acid donor (b) and the carbon donor (c) can be carried out simultaneously or successively.

The aqueous fire-retardant composition (B) comprises, in total and relative to the total weight of the aqueous fire-retardant composition (B), 40 to 80 wt.%, preferably from 45 to 75 wt.%, and more preferably from 55 to 70 wt.% of the acid donor (b) and the carbon donor (c).

Optionally, the aqueous fire-retardant composition (B) and the aqueous intumescent composition (C) may further be made to comprise from 0.5 to 10 wt.%, preferably from 1 to 5 wt.%, relative to the total weight of the acid donor (b) and the carbon donor (c), of a functional compound selected from the group consisting of aluminosilicates, calcium and magnesium silicates, such as wollastonite or talcum, silicon dioxide, titanium dioxide, aluminium hydroxide, calcium and magnesium phosphate, and mixtures thereof. The functional compounds may be added to the aqueous fire-retardant composition (B) at the same time as the acid donor (b) and the carbon donor (c). In a case where the acid donor (b) and the carbon donor (c) are added directly to the aqueous resin solution (A) to form the aqueous intumescent composition (C), the functional compound may be introduced into the aqueous resin solution (A) separately or together with the acid donor (b) and the carbon donor (c).

The acid donor (b) and the carbon donor (c) are introduced into the aqueous resin solution (A) in such an amount that a mass ratio of the solids content (a_{A}) of the aqueous resin solution (A) to the total amount of acid donor (b) and carbon donor (c) being added, (a_{A}):((b)+(c)), is in a range of from 0.25:1 to 5:1, preferably from 0.30:1 to 2.5:1. This also holds true when introducing the acid donor (b) and the carbon donor (c) into the aqueous resin solution (A) in the form of the aqueous fire-retardant composition (B). When the mass ratio of a solids content (a_{A}) of the aqueous resin solution (A) to the total amount of acid donor (b) and carbon donor (c), (a_{A}): ((b)+(c)), lies within the indicated ranges, it is possible to form a uniform and stable coating using the aqueous intumescent composition (C), thereby allowing excellent fire-retardant properties to be attained. Furthermore, the coating also will exhibit good durability and mechanical stability, thereby eliminating the need for applying an additional overcoating.

The aqueous intumescent composition (C) typically has a solids content (ac) of from 50 to 80 wt.%, preferably from 60 to 75 wt.% relative to the total weight of the aqueous intumescent composition (C). When the solids content (a_{C}) of the aqueous intumescent composition (C) lies within the indicated ranges, the properties of the aqueous intumescent composition (C) will be such as to allow for good handling thereof. In particular, it will be possible to easily apply the aqueous intumescent composition (C) using methods and procedures commonly employed in the art.

Optionally, further additives (d), such as melamine, urea, a curing agent, a flow agent, a defoaming agent and a dye may be added to the aqueous intumescent composition (C).

The addition amount of the additives (d) is not limited, as long as the fire-retardant properties of the treated substrate are not impaired. However, the total addition amount of the additives (d) typically will not exceed 5 wt.% relative to the total weight of the aqueous intumescent composition (C).

The additives (d) may be added to the aqueous resin solution (A) prior to, simultaneously with, or after introduction of the acid donor (b) and the carbon donor (c). The additives (d) may also be mixed with the acid donor (b) and/or the carbon donor (c) at a stage prior to being combined with the aqueous resin solution (A).

Materials that can be treated with the aqueous intumescent composition (C) ("substrates") include, but are not limited to, materials employed in the production of furniture and in interior building construction, e.g. wood-based materials, such as lumber (timber) and engineered wood, such as Plywood, densified wood, fiberboard (e.g. medium-density fiberboard (MDF) or high-density fiberboard (HDF)), particle board (PB), oriented strand board (OSB), laminated timber, parallel strand lumber (PSL), laminated strand lumber (LSL) and oriented strand lumber (OSL), glued laminated timber (glulam), and laminated veneer lumber (LVL), plastic-reinforced substrates such as wood-based insulation panels or wood plastic composites as well as materials used in decorative interior finishing. Aside from wood-based materials, the aqueous intumescent composition (C) may also be used for treating other materials to which fire-retardant coatings commonly are applied, as long as these materials are compatible with aqueous systems.

The composition is halogen-free. The need for halogen-free compositions is currently high, as halogen containing compositions are considered toxic, and can leach into the environment. In addition, they are generally not degradable. Providing compositions that are halogen-free thus ensures a safer way of passive fire protection.

**[Application of the aqueous intumescent composition (C)]** - the method of the invention employs the indirect coating method described on pages 16 to 20. Direct coating as described on pages 14 and 15 does not form part of the claimed invention.

In step (2) of the method for imparting fire-retardancy, the aqueous intumescent composition (C) is applied to the substrate. This may be done by methods and procedures commonly employed in the art, for example, by spraying, pouring, squeegee coating, roller coating or brush coating.

The applied coating will dry and cure on its own at room temperature. However, the process may also be accelerated by employing convective and/or radiation heat transfer means, such as a heat gun or a drying lamp. It also is possible to include a curing agent in the aqueous intumescent composition (C) in order to speed up the curing process.

During the curing process, crosslinking of the resin component will occur, thereby encapsulating the acid donor (b) and the carbon donor (c) with the melamine of the resin and locking them into position within the coating. Thereby, a durable coating wherein the homogeneous distribution of the components is cemented, and the components simultaneously are protected from any disturbances is formed.

The coating may be applied to one or more sides of the substrate. When doing so, the coating amount applied to any given side preferably lies in a range of from 40 to 400 g/m², more preferably in a range of from 60 to 200 g/m² and even more preferably in a range of from 80 to 150 g/m² in terms of the total amount of acid donor (b) and carbon donor (c).

The present inventors have found that a coating amount of 40 to 150 g/m² in terms of the total amount of acid donor (b) and carbon donor (c) is sufficient for most fields of application to allow the treated substrate to exhibit excellent fire-retardant properties. For specialized applications or to achieve exceptional fire-retardant properties, coating amounts in terms of the total amount of acid donor (b) and carbon donor (c) of 150 g/m² and more can be employed. For example, one may consider increasing the coating amount when applying the aqueous intumescent composition (C) to materials that are intended for roofing applications in order to increase the amount of intumescent char that will be formed upon exposure to fire. This will help to ensure that the joints between the roofing elements will be fully covered by the intumescent char and a fire is prevented from spreading to the insulating material sitting behind the roofing elements, which typically consists of highly flammable polyurethane or polyisocyanurate foams. The increased coating amount also will allow a significant reduction in the burn-through rate to be achieved.

Depending on the substrate, it may be necessary to divide the step (2) of applying the aqueous intumescent composition (C) into two or more steps of successively applying coating layers comprising a smaller amounts of the aqueous intumescent composition (C) in order to obtain a uniform and high-quality coating, especially when applying coating amounts approaching the value of 400 g/m². Such a strategy of repetitive application may, of course, be employed for any substrate or coating amount. If two or more layers of coating are applied to the substrate, an applied coating layer should be left to dry and cure prior to the application of the subsequent coating layer.

In the case of employing the aqueous intumescent composition (C) for fire-proofing wood-based decorative panels, the intumescent coating is applied to the panel substrate prior to application of a decorative paper. When evaluating the fire-retardant properties of decorative panels treated in such a manner, the present inventors observed that parts of the decorative paper making up the outer surface of the decorative panels may chip of during exposure to fire. It was also found that part of the intumescent coating may be carried off with the decorative paper chippings.

It is possible to make up for a potential loss of intumescent coating due to the chipping off of parts of a decorative paper by using higher coating amounts when employing the aqueous intumescent composition (C) for fire-proofing decorative panels. However, the present inventors also have developed an alternative means for ensuring that adequate fire-retardant properties are retained in spite of the possible chipping off during exposure to fire. In this approach, the aqueous intumescent composition (C) is not applied directly to the panel substrate, but rather one or more layers of an intumescent carrier, such as a kraft paper or a matting made of glass or other fibers that has been subjected to coating with the aqueous intumescent composition (C), are applied to the panel substrate prior to application of the decorative paper. When one or more layers of the intumescent carrier are located in between the panel substrate and the decorative paper, it is possible to prevent a loss of fire-retardant properties of the decorative panel due to the chipping off of parts of a decorative paper. Furthermore, this approach also allows the range of materials that can be treated to be expanded so as to include hydrophobic substrates, e.g. compact boards (CB) and compact laminates (CL), such as high-pressure laminates (HPL) and continuous pressure laminates (CPL).

In the following, the approach making use of an intumescent carrier will also be referred to as "indirect coating method".

In the indirect coating method, in step (2), a kraft paper or a matting made of glass or other fibers (hereafter also referred to as "base material for the intumescent carrier") is subjected to coating with the aqueous intumescent composition (C), followed by lamination of one or more layers of the intumescent carrier onto a substrate, together with a decorative paper.

The types of kraft paper that may be used as base material for the intumescent carrier are not specifically limited, and any kraft paper commonly employed in the art may be used. An example thereof is soda kraft paper. Commercially available kraft papers, e.g. a Starkraft^{®} brand as offered by Zellstoff Pöls AG or papers offered by APV Germany GmbH may be used. Such kraft papers typically exhibit a grammage ranging from 40 to 300 g/m². From the standpoint of ease of handling and manipulation of the kraft paper before and after being subjected to coating with the aqueous intumescent composition (C), the grammage of the kraft paper preferably will lie in the range of from 60 to 200 g/m² and more preferably in the range of from 80 to 150 g/m². When the grammage of the kraft paper lies within the indicated ranges, it also is possible to apply high amounts of acid donor (b) and carbon donor (c) when subjecting the kraft paper to coating with the aqueous intumescent composition (C).

The types of matting made of glass or other fibers that may be used as base material for the intumescent carrier also are not specifically limited, and any matting made of glass or other fibers commonly employed in the art may be used. Such materials are available, for example, from Johns Manville Corp. From the standpoint of ease of handling and manipulation of the matting made of glass or other fibers before and after being subjected to coating with the aqueous intumescent composition, the grammage of the matting made of glass or other fibers typically lies in the range of from 60 to 300 g/m², and preferably in the range of from 80 to 200 g/m². When the grammage of the matting made of glass or other fibers lies within the indicated ranges, it also is possible to apply high amounts of acid donor (b) and carbon donor (c) when subjecting the matting made of glass or other fibers to coating with the aqueous intumescent composition (C).

In the following, the kraft paper or matting made of glass or other fibers which has been subjected to coating with the aqueous intumescent composition (C) also will be referred to as "treated kraft paper" or "treated matting".

In order to enable easy lamination of the intumescent carrier with the substrate and the decorative paper, the base material for the intumescent carrier may be impregnated with a binder resin prior to being subjected to coating with the aqueous intumescent composition (C). As a binder the same aqueous resin solutions (A) as described above, such as aqueous melamine-formaldehyde resin solutions, aqueous melamine-urea-formaldehyde resin solutions, aqueous urea-formaldehyde resin solutions and/or aqueous phenol-formaldehyde resin solutions, may be used. However, the binder is not limited to such resin solutions, and any binder which does not impair the application of the aqueous intumescent composition (C) may be used. The type and amount of the binder resin to be impregnated can be varied according to the intended substrate and the type of decorative paper to be employed, but an impregnation amount typically will lie in the range of from 40 to 400 g/m².

Machines such as those produced by the company Vits may be employed for carrying out the impregnation of the base material for the intumescent carrier with the binder resin and the coating with the aqueous intumescent composition (C). In particular, an apparatus as described, for example, in DE 198 14 212 C1, DE 199 01 525 A1, or DE 199 46 325 A1 may be employed. When using such an apparatus, the amount of binder that is impregnated into the base material for the intumescent carrier and the amount of aqueous intumescent composition (C) that is coated thereon can be regulated by adjusting the operating parameters of the apparatus.

In a case where the base material for the intumescent carrier is impregnated with a binder resin prior to being subjected to coating with the aqueous intumescent composition (C), the impregnation of the base material for the intumescent carrier with the binder resin and the coating with the aqueous intumescent composition (C) can be carried out as successive steps of a single process. This may be done by using an application system for liquid overlay, for example, an ARP-coater.

Although a coating with the intumescent composition on both sides of the base material for the intumescent carrier theoretically is possible, the inventors surprisingly have found that the best fire-retardant properties are attained when subjecting only one side of the base material for the intumescent carrier to coating with the aqueous intumescent composition (C) and further arranging the intumescent carrier in such a manner as to make the intumescent-coated side thereof face away from the substrate.

From the viewpoints of ease of handling and manipulation and of attaining optimal fire-retardant properties, the amount of the aqueous intumescent composition (C) coated on the base material for the intumescent carrier preferably lies in the range of from 30 to 200 g/m², more preferably in the range of from 40 to 150 g/m², and even more preferably in the range of from 60 to 120 g/m² in terms of the total amount of acid donor (b) and carbon donor (c).

The types of decorative papers that may be used when preparing a fire-retardant decorative panel by the indirect coating method are not specifically limited, and any decorative paper that is commercially available and commonly employed in the art may be used.

Depending on the ultimately intended use of the decorated panel, a combination of one or more layers of the intumescent carrier and a decorative paper can be laminated onto one or both sides of the substrate. When doing so, the intumescent-coated side of each intumescent carrier layer is made to face away from the substrate. Surprisingly, the inventors have found that such an arrangement will yield the best fire-retardant properties.

If a decorative paper is to be applied on one side of a substrate only, a counteracting paper may be laminated to the other side of the substrate in order to prevent warping.

Methods and conditions commonly employed in the art may be used to prepare the laminate. Furthermore, in a case of preparing fire-retardant decorative panels on the basis of compact boards (CB) and compact laminates (CL), the process of applying the intumescent carrier and the decorative paper can also be combined with the process of producing the substrate. In such a case, the laminate can be prepared by stacking the elements of which the laminate is to consist (substrate or resin-impregnated core papers from which a compact board or compact laminate can be formed, intumescent carrier and decorative paper) and subsequently passing the assembly of elements through a press. The exact processing conditions will vary depending on the nature of the substrate and the decorative paper, but do not go beyond those commonly employed in the art.

Examples of layer arrangements that may be realized when preparing a decorative panel are given in the following. However, the claimed invention is not limited thereto.
**A)** decorative paper
   one or more layers of intumescent carrier
   substrate
   one or more layers of intumescent carrier
   decorative paper
**B)** decorative paper
   one or more layers of intumescent carrier
   substrate
   counteracting paper

Parts of the intumescent carrier may become detached if parts of the decorative paper chip off during exposure to fire. In view thereof, the use of more than one layer of an intumescent carrier is preferable from the standpoint of optimizing the fire-retardant properties of a decorative panel. Even more preferred is the use of multiple layers of intumescent carriers containing differing amounts of intumescent coating, wherein the layers are arranged in a manner such that the amount of intumescent coating on neighboring layers successively decreases from the layer adjoining the substrate to the layer adjoining the decorative paper, thereby effectively establishing a concentration gradient. For example, in a case of employing two layers of intumescent carrier, the layer adjoining the decorative paper may be made to comprise a coating amount of 40 g/m² in terms of the total amount of acid donor (b) and carbon donor (c) and the layer adjoining the substrate may be made to comprise a coating amount of 60 g/m² in terms of the total amount of acid donor (b) and carbon donor (c).

The use of an intumescent carrier for improving the fire-retardancy of a substrate offers the further advantage of allowing the range of application to be expanded. Namely, the use of an intumescent carrier makes it possible to also use hydrophobic substrates, e.g. compact boards (CB) and compact laminates (CL), such as high-pressure laminates (HPL) and continuous pressure laminates (CPL).

The use of an intumescent carrier for improving the fire-retardancy of a substrate also offers the further advantage of it being possible to produce the intumescent carrier at a location that is different from the location at which a laminate comprising the intumescent carrier is prepared and/or a location that is different from the location at which a treated product is to be employed or further processed. Thus, the weight and volume of a material to be transported and, consequently, also the transport costs, can be reduced by shipping only the intumescent carrier to the site at which a laminate comprising the intumescent carrier is to be employed and at which an untreated substrate already is present, rather than having to ship the treated product. Furthermore, the packaging and transport of the intumescent carrier may be simpler than that of a treated product or of components required for forming an intumescent composition.

The indirect coating method can also be extended so as to make use of an intumescent composition other than the aqueous intumescent composition (C) as described (not claimed).

That is to say, the further advantages described above can be attained when the intumescent carrier is subjected to coating with any intumescent composition comprising an acid , a charring agent and a blowing agent. Suitable acid sources, charring agents and blowing agents are an acid donor (b), a carbon donor (c) and an aqueous resin solution (A) as described above.

In a particularly preferred embodiment, the invention pertains to a fire-retardant product comprising a wood or natural fiber-based board or panel onto which an intumescent carrier has been laminated, wherein said intumescent carrier comprises a kraft paper or a matting made of glass or other fibers that has been subjected to an intumescent coating, the coating comprising a melamine containing resin such as MF or MUF resin, a carbon donor chosen from erythritol, pentaerythritol, dipentaerythritol, tripentaerythritol and an acid donor chosen from ammonium polyphosphate and guanidine phosphate. Preferably, said melamine containing resin is a pre-condensed resin. In a further preferred embodiment, the coating or composition coated onto the carrier will be applied at a concentration of from 20 to 100 g/100 g carrier, preferably in the range of from 20 to 75 g/100 g carrier, and more preferably in the range of from 25 to 50 g/100 g carrier.

### [Advantages of the claimed invention]

The claimed invention thus provides an improved method for imparting fire-retardancy on a substrate. The invention also provides an intumescent carrier.

The claimed invention makes it possible to eliminate organic solvents when formulating fire-retarding compositions, thereby reducing the environmental impact.

At the same time, it allows for a better distribution of components to be achieved in an aqueous intumescent composition (C), reducing the overall amount of materials, and in particular the amount of an acid donor (b) and a carbon donor (c), that are required in order to imbue a substrate with a certain degree of fire retardancy. This improvement serves to further reduce the environmental impact and also reduces associated costs.

The aqueous resin solution that is employed to prepare the aqueous intumescent composition (C) principally can be the same as a resin solution that is employed as a binder in the production of such products as particle boards or oriented strand boards, thereby making it possible to rely on a raw material that already is present at a production site for preparing the aqueous intumescent composition (C) and to only have to further acquire the fire-retardant composition (B) or the components for preparing such a composition when wanting to directly treat such substrates at their site of production. Only having to deal with the components for preparing the fire-retardant composition (B) further offers the advantage of being able to operate with solids or a mixture thereof exhibiting a high degree of storage stability.

The aqueous intumescent composition (C) offers the advantage of being easy to handle, manipulate and apply. Furthermore, the coating formed therefrom, wherein the acid donor (b) and carbon donor (c) are encased by a resin, combines stability and durability with superior fire-retardant properties.

An advantage of the claimed invention over a method wherein a fire-retarding composition is added into a raw material, such as during the production of a wood-based panel, lies in being able to make use of any customary material as substrate. This also means that the conditions for producing the substrate do not have to take into account the presence of a fire-retarding composition or an intumescent composition and thus are not limited thereby. In contrast to the method of the present invention, a prior art process wherein fire-retardant additives are incorporated while producing the substrate itself will require changeover times, lower temperatures and lower processing speeds, thereby causing reduced productivity. Furthermore, the incorporation of fire-retardant additives during the production of the substrate as carried out in the prior art generally will result in requiring the substrates to exhibit higher density and special glues having to be employed in order for the product to exhibit satisfactory mechanical properties.

Separating the preparation of the intumescent composition from that of the product to be treated also allows the ratio of the resin component to the fire-retardant components, i.e. the acid donor (b) and the carbon donor (c), to be optimized, since the resin contained in the intumescent composition is not required to serve the additional function of holding together the components making up the substrate.

Following an indirect coating method of first applying the aqueous intumescent composition (C) to a base material for an intumescent carrier, allows expand the range of materials that can be treated to be expanded so as to include hydrophobic substrates, thereby making it possible to also prepare fire-retardant decorative panels on the basis of compact boards (CB) and compact laminates (CL). Thus, the aqueous intumescent composition (C) is suitable not only for treating materials that are to be used in construction projects, but also is broadly applicable to the areas of furniture construction and decorative interior finishing.

The indirect coating method also provides the further advantage of it being possible to produce the intumescent carrier at a location that is different from the location at which a laminate comprising the intumescent carrier is assembled and/or a location that is different from the location at which a treated product is to be employed or further processed.

In the following, the claimed invention will be exemplified by specific Examples. However, these Examples are not intended to limit the claimed invention in any manner.

### [Examples]

### Preparation of aaueous fire-retardant composition (B) and aaueous intumescent composition (C)

### Example 1

80 parts by weight of ammonium polyphosphate (APP SD2 -Ecochem) were mixed with 20 parts by weight of pentaerythritol (Penta F40 - Ecochem). 65 parts by weight of the obtained mixture were alternatingly combined with 35 parts by weight of deionized water, followed by mixing with a dispersion mixer for 10 minutes, so as to obtain an aqueous fire-retardant composition (B) in the form of a suspension.

65 parts by weight of Kauramin^{®} 650 having a melamine content of 55% were mixed into 35 parts by weight of deionized water to obtain an aqueous resin solution (A) having a melamine content of about 36% and a solids content (a_{A}) of 65%.

An aqueous intumescent composition (C) was prepared by mixing the aqueous fire-retardant composition (B) into the aqueous resin solution (A) under stirring in an amount so as to realize a mass ratio (a_{A}):((b)+(c)) (solids content derived from the aqueous resin solution (A) to fire-retardant component derived from the aqueous fire-retardant composition (B)) of 1:1.3.

### Example 2

80 parts by weight of ammonium polyphosphate (APP SD2 -Ecochem) were mixed with 20 parts by weight of pentaerythritol (Penta F40 - Ecochem) to obtain a fire-retardant component.

65 parts by weight of Kauramin^{®} 650 (BASF) having a melamine content of 55% were mixed into 35 parts by weight of deionized water to obtain an aqueous resin solution (A) having a melamine content of about 36% and a solids content (a_{A}) of 65%.

A dispersion mixer was used to mix the fire-retardant component, the aqueous resin solution (A) and water in amounts so as to yield an aqueous intumescent composition (C) comprising 35% of water and exhibiting a mass ratio (a_{A}):((b)+(c)) (solids content derived from the aqueous resin solution (A) to fire-retardant component) of 1:1.3.

### Example 3

An acid donor composition was prepared by mixing the types and relative amounts of acid donor components and the functional compound silicon dioxide as indicated in Table 1.

A carbon donor composition was prepared by mixing the types and relative amounts of carbon donor components as indicated in Table 1.

80 parts by weight of the acid donor composition were mixed with 20 parts by weight of the carbon donor composition. 65 parts by weight of the resulting mixture were alternatingly combined with 35 parts by weight of deionized water, followed by mixing with a dispersion mixer for 10 minutes, so as to obtain an aqueous fire-retardant composition (B) in the form of a suspension.

An aqueous resin composition (A) having a melamine content of about 29% and a solids content (a_{A}) of 65% was prepared by mixing 52 parts by weight of Kauramin^{®} 650 (BASF) having a melamine content of 55% and 13 parts by weight of Kaurit^{®} 390 (BASF) with 35 parts by weight of deionized water.

The aqueous fire-retardant composition (B) was mixed with the aqueous resin solution (A) in an amount so as to obtain an aqueous intumescent composition (C) having a mass ratio (a_{A}):((b)+(c)) (solids content derived from the aqueous resin solution (A) to fire-retardant component derived from the aqueous fire-retardant composition (B)) of 1:1.3.

### Example 4

An acid donor composition was prepared by mixing the types and relative amounts of acid donor components and the functional compound silicon dioxide as indicated in Table 1.

A carbon donor composition was prepared by mixing the types and relative amounts of carbon donor components as indicated in Table 1.

80 parts by weight of the acid donor composition were mixed with 20 parts by weight of the carbon donor composition. 65 parts by weight of the resulting mixture were alternatingly combined with 35 parts by weight of deionized water, followed by mixing with a dispersion mixer for 10 minutes, so as to obtain an aqueous fire-retardant composition (B) in the form of a suspension.

An aqueous resin composition (A) having a melamine content of about 29% and a solids content (a_{A}) of 65% was prepared by mixing 52 parts by weight of Kauramin^{®} 650 (BASF) having a melamine content of 55% and 26.3 parts by weight of deionized water. Thereafter, 21.7 parts by weight of a 60% aqueous solution of Bakelite^{®} PF 1981 HD (HEXION) were added while stirring the mixture.

The aqueous fire-retardant composition (B) was mixed with the aqueous resin solution (A) in an amount so as to obtain an aqueous intumescent composition (C) having a mass ratio (a_{A}):((b)+(c)) (solids content derived from the aqueous resin solution (A) to fire-retardant component derived from the aqueous fire-retardant composition (B)) of 1:1.3.

### Example 5

An acid donor composition was prepared by mixing the types and relative amounts of acid donor components and the functional compound silicon dioxide as indicated in Table 1.

A carbon donor composition was prepared by mixing the types and relative amounts of carbon donor components as indicated in Table 1.

80 parts by weight of the acid donor composition were mixed with 20 parts by weight of the carbon donor composition. 65 parts by weight of the resulting mixture were alternatingly combined with 35 parts by weight of deionized water, followed by mixing with a dispersion mixer for 10 minutes, so as to obtain an aqueous fire-retardant composition (B) in the form of a suspension.

An aqueous resin composition (A) having a melamine content of about 29% and a solids content (a_{A}) of 65% was prepared by mixing 52 parts by weight of Kauramin^{®} 650 (BASF) having a melamine content of 55% and 6.5 parts by weight of Kaurit^{®} 390 (BASF) with 30.7 parts by weight of deionized water. Thereafter, 10.8 parts by weight of a 60% aqueous solution of Bakelite^{®} PF 1981 HD (HEXION) were added while stirring the mixture.

The aqueous fire-retardant composition (B) was mixed with the aqueous resin solution (A) in an amount so as to obtain an aqueous intumescent composition (C) having a mass ratio (a_{A}):((b)+(c)) (solids content derived from the aqueous resin solution (A) to fire-retardant component derived from the aqueous fire-retardant composition (B)) of 1:1.3.

### Comparative Example 1

80 parts by weight of ammonium polyphosphate (APP SD2 -Ecochem) were mixed with 20 parts by weight of pentaerythritol (Penta F40 - Ecochem). 65 parts by weight of the obtained mixture were alternatingly combined with 35 parts by weight of deionized water, followed by mixing with a dispersion mixer for 10 minutes, so as to obtain an aqueous fire-retardant composition (B) in the form of a suspension.

An aqueous resin solution (A) having a melamine content of about 16% and a solids content (a_{A}) of 65% was prepared by mixing 29.2 parts by weight of Kauramin^{®} 650 (BASF) having a melamine content of 55% and 17.9 parts by weight of Kaurit^{®} 390 (BASF) with 23.1 parts by weight of deionized water. Thereafter, 29.8 parts by weight of a 60% aqueous solution of Bakelite^{®} PF 1981 HD (HEXION) were added while stirring the mixture.

An aqueous intumescent composition (C) was prepared by mixing the aqueous fire-retardant composition (B) into the aqueous resin solution (A) under stirring in an amount so as to realize a mass ratio (a_{A}): ((b)+(c)) (solids content derived from the aqueous resin solution (A) to fire-retardant component derived from the aqueous fire-retardant composition (B)) of 1:1.3.

**Table 1 - FR Compositions**

| | | **Example 1** | **Example 2** | **Example** 3 | **Example 4** | **Example 5** | **Comp. Ex. 1** |
|---|---|---|---|---|---|---|---|
| **Acid donor composition (Parts by weight)** | APP¹ | 100 | 100 | 90 | 90 | 90 | 100 |
| | Guanyl phosphate | | | 8 | 8 | 8 | |
| | Guanylurea phosphate | | | 1 | 1 | 1 | |
| | Silicon dioxide² (functional compound) | | | 1 | 1 | 1 | |
| **Carbon donor composition (Parts by weight)** | Pentaerythritol³ | 100 | 100 | 75 | 75 | 75 | 100 |
| | Erythritol | | | 15 | 15 | 15 | |
| | Sorbitol | | | 10 | 10 | 10 | |
| **Mass ratio (b):(c) in aqueous fire-retardant composition (B)** | | 4:1 | 4:1 | 4:1 | 4:1 | 4:1 | 4:1 |
| **Relative amounts of resin components (Parts by weight)** | MF⁴ | 100 | 100 | 80 | 80 | 80 | 45 |
| | UF⁵ | | | 20 | | 10 | 27.5 |
| | PF⁶ | | | | 20 | 10 | 27.5 |
| **Solids content (a_{A})of resin composition (A)** | | 65% | 65% | 65% | 65% | 65% | 65% |
| **Melamine content of resin composition (A)** | | 36% | 36% | 29% | 29% | 29% | 16% |
| **Mass ratio** | | 1 : 1.3 | 1 : 1.3 | 1 : 1.3 | 1 : 1.3 | 1 : 1.3 | 1 : 1.3 |
| **(a_{A}):((b)+(c))** | | | | | | | |
| **Aqueous intumescent composition (C)** | | C1 | C2 | C3 | C4 | C5 | C6 |

| | | | | | | | |
|---|---|---|---|---|---|---|---|
| ¹ APP F72 SD2 (Ecochem) ² Orisil^{®} 200 ³ Penta F40 (Ecochem) ⁴ Kauramin^{®} 650 (BASF) ⁵ Kaurit^{®} 390 (BASF) ⁶ Bakelite^{®} PF 1981 HD (HEXION) | | | | | | | |

### Testing of aaueous intumescent composition (C)

### Direct Coating (not claimed)

### Examples 6 through 12

An aqueous intumescent composition (C) as prepared according to one of Examples 1-5was coated on a substrate measuring 15.5 cm x 30 cm in the amount indicated in Table 2 using a brush. The coated substrate was placed in a drying oven at 80°C for 10 minutes. The fire test of the treated substrate was performed according to the standard UNI 9174 (2010).

### Comparative Example 2

An aqueous intumescent composition (C) as prepared according to Comparative Example 1 was coated on a substrate measuring 15.5 cm x 30 cm in the amount indicated in Table 2 using a brush. The coated substrate was placed in a drying oven at 80°C for 10 minutes. The fire test of the treated substrate was performed according to the standard UNI 9174 (2010).

**Table 2a - Results of direct coating FR tests**

| | | **Direct coating** | | | |
|---|---|---|---|---|---|
| | | **Example 6** | **Example 7** | **Example 8** | **Example 9** |
| **Substrate** | | OSB of type OSB3 | OSB of type OSB3 | OSB of type OSB3 | OSB of type OSB3 |
| **Coating composition** | | C1 | C2 | C1 | C3 |
| **Coating amount (b)+(c)(g/m²)** | | 100 | 100 | 80 | 80 |
| Flame Height/ Flame spread (UNI 9174) | 30 s | < frame/30 mm | < frame/30 mm | < frame/30 mm | < frame/30 mm |
| | 120 s | < frame/30 mm | < frame/30 mm | 1 cm/40 mm | < frame/30 mm |
| | 240 s | < frame/30 mm | < frame/30 mm | | |
| | 360 s | < frame/30 mm | < frame/30 mm | 3 cm/60 mm | 3 cm/70 mm |
| | 480 s | < frame/30 mm | < frame/30 mm | 4 cm/70 mm | 2 cm/70 mm |

| | | | | | |
|---|---|---|---|---|---|
| Flame height values: "< frame" indicates that the flame did not exceed the height of the frame of the specimen holder; "= frame" indicates that the flame height was equal to the height of the frame of the specimen holder; numerical values indicate a height of the flame above the frame of the specimen holder. | | | | | |

**Table 2b - Results of direct coating FR tests**

| | | **Direct coating** | | | |
|---|---|---|---|---|---|
| | | **Example 10** | **Example 11** | **Example 12** | **Comp. Ex. 2** |
| **Substrate** | | MDF of type MDF according to EN 622-5 | OSB of type OSB3 | OSB of type OSB3 | OSB of type OSB3 |
| **Coating composition** | | C3 | C4 | C5 | C6 |
| **Coating amount (b)+(c) (g/m²)** | | 80 | 80 | 80 | 100 |
| Flame Height/ Flame spread (UNI 9174) | 30 s | < frame/30 mm | < frame/30 mm | < frame/30 mm | 2 cm/30 mm |
| | 120 s | < frame/30 mm | < frame/30 mm | 1 cm/40 mm | 14 cm/80 mm^{†} |
| | 360 s | 1 cm/50 mm | 3 cm/60 mm | 4 cm/60 mm | |
| | 480 s | 2 cm/50 mm | 6 cm/60 mm | 6 cm/60 mm | |

| | | | | | |
|---|---|---|---|---|---|
| ^{†}fire test aborted because flame height too high | | | | | |

Flame height values: "< frame" indicates that the flame did not exceed the height of the frame of the specimen holder; "= frame" indicates that the flame height was equal to the height of the frame of the specimen holder; numerical values indicate a height of the flame above the frame of the specimen holder.

### Indirect coating (according to the invention)

### Preparation of intumescent carrier

65 parts by weight of Kauramin^{®} 650 having a melamine content of 55% were mixed into 35 parts by weight of deionized water to obtain an aqueous resin solution.

A soda kraft paper was passed through the aqueous resin solution to impregnate the paper with the resin solution. Excess resin solution was removed from the surface of the impregnated kraft paper using a squeegee. Subsequently, an aqueous intumescent composition (C1) as prepared according to Example 1 was applied to one side of the impregnated kraft paper using a brush and the treated kraft paper was dried in a drying oven at 80°C so as to reduce the moisture content of the treated kraft paper to 6-7%. The moisture content was assessed using an infrared moisture analyzer (Sartorius MA 35; 80°C, 16 minutes).

By this method, a first treated kraft paper (TKP1) carrying a combined amount of acid donor (b) and carbon donor (c) of 40 g/m², a second treated kraft paper (TKP2) carrying a combined amount of acid donor (b) and carbon donor (c) of 60 g/m², and a third treated kraft paper (TKP3) carrying a combined amount of acid donor (b) and carbon donor (c) of 80 g/m² were prepared.

### Testing of intumescent carrier

### Examples 13

A treated decorative panel was prepared by stacking a sheet of a common pre-impregnated decorative paper (200 g/m²), a sheet of a first intumescent carrier (TKP1) with the intumescence-carrying side facing the decorative paper, a sheet of a second intumescent carrier (TKP2) with the intumescence-carrying side facing the first intumescent carrier, a substrate (PB), a sheet of a third intumescent carrier (TKP2) with the intumescence-carrying side facing away from the substrate, a sheet of a fourth intumescent carrier (TKP1) with the intumescence-carrying side facing away from the third intumescent carrier and a common pre-impregnated decorative paper (200 g/m²) in this order and passing the assembled elements through a press (Bürkle Laborpresse). The fire test of the treated product was performed according to the standard UNI 9174 (2010).

### Examples 14

A treated decorative panel was prepared by stacking a sheet of a common pre-impregnated decorative paper (200 g/m²), a sheet of a first intumescent carrier (TKP1) with the intumescence-carrying side facing the decorative paper, a sheet of a second intumescent carrier (TKP3) with the intumescence-carrying side facing the first intumescent carrier, a substrate (PB), a sheet of a third intumescent carrier (TKP3) with the intumescence-carrying side facing away from the substrate, a sheet of a fourth intumescent carrier (TKP1) with the intumescence-carrying side facing away from the third intumescent carrier and a common pre-impregnated decorative paper (200 g/m²) in this order and passing the assembled elements through a press (Bürkle Laborpresse). The fire test of the treated product was performed according to the standard UNI 9174 (2010).

### Examples 15

A treated decorative panel was prepared by stacking a sheet of a common pre-impregnated decorative paper (200 g/m²), a sheet of a first intumescent carrier (TKP2) with the intumescence-carrying side facing the decorative paper, a sheet of a second intumescent carrier (TKP2) with the intumescence-carrying side facing the first intumescent carrier, a substrate (CB), a sheet of a third intumescent carrier (TKP2) with the intumescence-carrying side facing away from the substrate, a sheet of a fourth intumescent carrier (TKP2) with the intumescence-carrying side facing away from the third intumescent carrier and a common pre-impregnated decorative paper (200 g/m²) in this order and passing the assembled elements through a press (Bürkle Laborpresse). The fire test of the treated product was performed according to the standard UNI 9174 (2010).

### Examples 16

A treated decorative panel was prepared by stacking a sheet of a common pre-impregnated decorative paper (200 g/m²), a sheet of an intumescent carrier (TKP3) with the intumescence-carrying side facing the decorative paper, a substrate (MDF), a further sheet of the intumescent carrier (TKP3) with the intumescence-carrying side facing away from the substrate and a common pre-impregnated decorative paper (200 g/m²) in this order and passing the assembled elements through a press (Bürkle Laborpresse). The fire test of the treated product was performed according to the standard UNI 9174 (2010).

**Table 3 - Results of indirect coating FR tests**

| **Indirect coating** | | | | | | |
|---|---|---|---|---|---|---|
| | | | **Example 13** | **Example 14** | **Example 15** | **Example 16** |
| **Decorative panel layout** | **Covering layer** | | decorative paper | decorative paper | decorative paper | decorative paper |
| | **Intumescent carrier 4** | | TKP1 | TKP1 | TKP2 | - |
| | **Intumescent carrier 3** | | TKP2 | TKP3 | TKP2 | TKP3 |
| | **Substrate** | | PB of type P2 | PB of type P2 | CB of type HPL | MDF of type MDF according to EN 622-5 |
| | **Intumescent carrier 2** | | TKP2 | TKP3 | TKP2 | TKP3 |
| | **Intumescent carrier 1** | | TKP1 | TKP1 | TKP2 | - |
| | **Covering layer** | | decorative paper | decorative paper | decorative paper | decorative paper |
| **Total coating amount (a)+(b) (g/m² per side of substrate)** | | | 100 | 120 | 120 | 80 |
| **Flame Height/ Flame spread (UNI 9174)** | | 30 s | 2 cm/30 mm | 2 cm/30 mm | = frame/30 mm | 2 cm/30 mm |
| | | 120 s | < frame/30 mm | < frame/30 mm | < frame/40 mm | < frame/40 mm |
| | | 150 s | | | | < frame/40 mm |
| | | 240 s | | | | 4 cm/50 mm |
| | | 360 s | 10 cm/60 mm | 4 cm/50 mm | 4 cm/40 mm | 10 cm/50 mm |
| | 480 s | 10 cm/60 mm | 7 cm/50 mm | 9 cm/40 mm | 12 cm/60 mm | |

| | | | | | | |
|---|---|---|---|---|---|---|
| Flame height values: "< frame" indicates that the flame did not exceed the height of the frame of the specimen holder; "= frame" indicates that the flame height was equal to the height of the frame of the specimen holder; numerical values indicate a height of the flame above the frame of the specimen holder. | | | | | | |

### Results of testing

When testing the fire-retardancy of a sample according to UNI 9174 test conditions, a flame spread value that does not exceed a value of 200 mm will usually yield a rating of "Class 1", which is the highest rating that can be achieved when testing according to UNI 9174.

It is the inventors' experience that samples which perform well under UNI 9174 test conditions generally also will perform well under DIN EN 13823 (SBI) test conditions, and that a correlation can be constructed between the results of the two types of tests. A flame height in the first 2 minutes of ≤ 10 cm above the frame height of the specimen holder under UNI 9174 test conditions generally is indicative of quite good fire-retardant properties and typically correlates to a FIGRA value under DIN EN 13823 test conditions as required for classification as Euroclass B. Furthermore, a flame spread ≥ 200 mm and/or a flame height of ≥ 12 cm above the frame height of the specimen holder in the first 2 minutes generally indicates that one or both of the threshold values of THR and FIGRA that are required for a classification as Euroclass B will be exceeded.

To corroborate the correlation mentioned above, a treated substrate was prepared in the manner as described for Example 6 and was then tested according to the standard DIN EN 13823 (2015) (SBI test). The test results were as follows:
FIGRA 0.2 MJ: 11 W/s
THR (600s): 1.5 MJ
TSP (600s): 61.5 m²
SMOGRA: 4 m²/s²
Bs1d0 after smoke density correction (Euroclass B)

Based on the correlation between the results of testing under UNI 9174 test conditions and testing under DIN EN 13823 test conditions, it can be predicted with a high degree of certainty that the fired-retardant properties of the treated products obtained in Examples 13-15 also satisfy the requirements for classification as Euroclass B and that the fired-retardant properties of the treated product obtained in Examples 16 will be near the boundary between properties classified as Euroclass B and properties classified as Euroclass C, both of which classifications describe a condition of low flammability.

In addition to the experiments that are described in detail above, further experiments wherein differing coating amounts were applied to a substrate were carried out (by direct coating, as well as by indirect coating). When assessing the fire-retardant properties of the treated substrates it was found that the use of a total coating amount of 80-110 g/m² generally made possible a classification according to DIN EN 13823 (2015) of Euroclass B when directly coating a substrate, and a total coating amount of 100-120 g/m² generally made possible a classification according to DIN EN 13823 (2015) of Euroclass B when indirectly coating a substrate. The mentioned coating amounts refer to an amount coated on any given side of a substrate, applied as one or more layers.

Experiments making use of commercially available aqueous resin solutions (e.g. a Kauramin^{®}-type as obtained from BASF) also were carried out. The results of these experiments agreed with the results that were obtained when employing powder type resins components.

## Claims

1. A method for imparting fire-retardancy on a wood- or cellulose-based material that can be employed in the production of furniture, interior building construction or decorative interior finishing, the method comprising the following steps (1) and (2) of:
(1) introducing an acid donor (b) and a carbon donor (c) into an aqueous resin solution (A) to obtain an aqueous intumescent composition (C), wherein
the aqueous resin solution (A) is selected from the group consisting of aqueous melamine-formaldehyde resin solutions, aqueous melamine-urea-formaldehyde resin solutions, mixtures thereof and mixtures thereof with aqueous urea-formaldehyde resin solutions and/or aqueous phenol-formaldehyde resin solutions; wherein
the aqueous resin solution (A) exhibits a total melamine content of from 20 to 45 wt.%, preferably from 25 to 35 wt.% relative to the total weight of the aqueous resin solution (A);
the acid donor (b) is selected from the group consisting of ammonium polyphosphate, guanylurea phosphate, guanidine phosphate and mixtures thereof;
the carbon donor (c) is selected from the group consisting of glucose, arabinose and other monosaccharides, lactose, maltose and other disaccharides, starch, cellulose, dextrin and other polysaccharides, sorbitol, erythritol, pentaerythritol, dipentaerythritol, tripentaerythritol, mannitol or other polyhydric alcohols and mixtures thereof;
the mass ratio of acid donor (b) to carbon donor (c), (b):(c), introduced into the aqueous resin solution (A) is in a range of from 10:1 to 1:1, preferably from 8:1 to 1:1, and more preferably from 6:1 to 1:1; and
the acid donor (b) and the carbon donor (c) are introduced into the aqueous resin solution (A) in such an amount that a mass ratio of the solids content (a_{A}) of the aqueous resin solution (A), as determined according to DIN 53216, to the total amount of acid donor (b) and carbon donor (c), (a_{A}):((b)+(c)), is in a range of from 0.25:1 to 5:1, preferably from 0.30:1 to 2.5:1;
the aqueous intumescent composition (C) exhibits a solids content (a_{C}) of from 50 to 80 wt.%, preferably from 60 to 75 wt.%, relative to the total weight of the aqueous intumescent composition (C);
(2) a step (2B) of laminating one or more layers of an intumescent carrier and a decorative paper onto the wood- or cellulose-based material in the named order,
wherein the intumescent carrier comprises a matting made of glass or other fibers that has been subjected to coating with the aqueous intumescent composition (C).

2. The method according to claim 1, wherein the acid donor (b) and the carbon donor (c) are introduced into the aqueous resin solution (A) as particulate powders and, if necessary, a solids content (a_{C}) of the aqueous intumescent composition (C) is adjusted by the addition of water so as to lie in the range of from 50 to 80 wt.%, preferably from 60 to 75 wt.%, relative to the total weight of the aqueous intumescent composition (C).

3. The method according to claim 1, wherein, prior to their introduction into the aqueous resin solution (A), the acid donor (b) and the carbon donor (c) are dispersed or suspended in water to form an aqueous fire-retardant composition (B) comprising, in total, from 40 to 80 wt.%, preferably from 45 to 75 wt.%, and more preferably from 55 to 70 wt.% of the acid donor (b) and the carbon donor (c) relative to the total weight of the aqueous fire-retardant composition (B).

4. The method according to any one of claims 1-3, wherein the total amount of acid donor (b) and carbon donor (c) coated on the intumescent carrier is in a range of from 30 to 200 g/m², more preferably in a range of from 40 to 150 g/m², and even more preferably in a range of from 60 to 120 g/m².

5. The method according to any one of claims 1 to 4, wherein the aqueous resin solution (A) comprises a mixture of an aqueous melamine-formaldehyde resin solution with an aqueous phenol-formaldehyde resin solution, wherein a mass ratio of a solids content (a_{MF}) derived from the aqueous melamine-formaldehyde resin to a solids content (a_{PF}) derived from the aqueous phenol-formaldehyde resin is from 2:1 to 10:1, preferably from 3:1 to 9:1, and more preferably from 4:1 to 8:1.

6. The method according to any one of claims 1 to 5, wherein the acid donor (b) is selected from the group consisting of ammonium polyphosphate and guanidine phosphate.

7. The method according to any one of claims 1 to 6, wherein the carbon donor (c) is selected from the group consisting of starch, cellulose, dextrin and other polysaccharides, sorbitol, erythritol, pentaerythritol, dipentaerythritol, tripentaerythritol, mannitol or other polyhydric alcohols and mixtures thereof, preferably the carbon donor (c) is selected from the group consisting of sorbitol, erythritol, pentaerythritol, dipentaerythritol, tripentaerythritol, mannitol and mixtures thereof.

8. The method according to any one of claims 1 to 7, wherein the aqueous resin solution (A) exhibits a solids content (a_{A}) of from 45 to 75 wt.%, preferably from 50 to 70 wt.%, and more preferably from 55 to 65 wt.% relative to the total weight of the aqueous resin solution (A).

9. The method according to any one of claims 1 to 8, wherein the wood-based material is selected from the group consisting of lumber, timber and engineered wood, such as plywood, densified wood, fiberboard, such as medium-density fiber-board (MDF) or high-density fiberboard (HDF), particle board (PB), oriented strand board (OSB), laminated timber, parallel strand lumber (PSL), laminated strand lumber (LSL) and oriented strand lumber (OSL), glued laminated timber (glulam), laminated veneer lumber (LVL), wood-based insulation panel, wood plastic composites and the cellulose-based material is selected from a compact board (CB) or a compact laminate (CL), such as a high-pressure laminate (HPL) and a continuous pressure laminate (CPL).

10. Intumescent carrier for laminating onto a wood or natural fiber-based board, said intumescent carrier comprising a matting made of glass or other fibers that has been subjected to coating with an intumescent composition comprising an acid source, a charring agent and a blowing agent, wherein the matting made of glass or other fibers has been subjected to coating with an aqueous intumescent composition (C) comprising:
an aqueous resin solution (A) selected from the group consisting of aqueous melamine-formaldehyde resin solutions, aqueous melamine-urea-formaldehyde resin solutions, mixtures thereof and mixtures thereof with aqueous urea-formaldehyde resin solutions and/or aqueous phenol-formaldehyde resin solutions;
an acid donor (b) selected from the group consisting of ammonium polyphosphate, guanylurea phosphate, guanidine phosphate and mixtures thereof;
a carbon donor (c) selected from the group consisting of glucose, arabinose and other monosaccharides, lactose, maltose and other disaccharides, starch, cellulose, dextrin and other polysaccharides, sorbitol, erythritol, pentaerythritol, dipentaerythritol, tripentaerythritol, mannitol or other polyhydric alcohols and mixtures thereof;
the aqueous resin solution (A) exhibits a total melamine content of from 20 to 45 wt.%, preferably from 25 to 35 wt.% relative to the total weight of the aqueous resin solution (A);
the mass ratio of acid donor (b) to carbon donor (c), (b):(c), introduced into the aqueous resin solution (A) is in a range of from 10:1 to 1:1, preferably from 8:1 to 1:1, and more preferably from 6:1 to 1:1; and
the acid donor (b) and the carbon donor (c) are included into the aqueous resin solution (A) in such an amount that a mass ratio of the solids content (a_{A}) of the aqueous resin solution (A), as determined according to DIN 53216, to the total amount of acid donor (b) and carbon donor (c), (a_{A}):((b)+(c)), is in a range of from 0.25:1 to 5:1, preferably from 0.30:1 to 2.5:1;
the aqueous intumescent composition (C) exhibits a solids content (a_{C}) of from 50 to 80 wt.%, preferably from 60 to 75 wt.%, relative to the total weight of the aqueous intumescent composition (C).

11. The intumescent carrier according to claim 10, wherein the amount of the aqueous intumescent composition (C) coated onto the matting made of glass or other fibers lies in the range of from 30 to 200 g/m², preferably in the range of from 40 to 150 g/m², and more preferably in the range of from 60 to 120 g/m² in terms of the total amount of acid donor (b) and carbon donor (c).

12. A fire-retardant product comprising a wood or natural fiber-based board or panel onto which an intumescent carrier as defined in claim 10 or 11 and optionally a decorative paper have been laminated.

13. The fire-retardant product according to claim 12, wherein the wood or natural fiber-based board or panel is selected from the group consisting of lumber, timber and engineered wood, such as plywood, densified wood, fiberboard, such as medium-density fiber-board (MDF) or high-density fiberboard (HDF), particle board (PB), oriented strand board (OSB), laminated timber, parallel strand lumber (PSL), laminated strand lumber (LSL) and oriented strand lumber (OSL), glued laminated timber (glulam), laminated veneer lumber (LVL), compact board (CB) and compact laminate (CL), such as a high-pressure laminate (HPL) and a continuous pressure laminate (CPL).

## Patentansprüche

1. Verfahren zum Versehen eines Materials auf Holz- oder Cellulosebasis, das bei der Herstellung von Möbeln, im Innenausbau oder in der dekorativen Innenausstattung eingesetzt werden kann, mit Flammhemmung, wobei das Verfahren die folgenden Schritte (1) und (2) umfasst:
(1) Einbringen eines Säure-Donors (b) und eines Kohlenstoff-Donors (c) in eine wässrige Harzlösung (A), um eine wässrige intumeszente Zusammensetzung (C) zu erhalten, wobei
die wässrige Harzlösung (A) aus der Gruppe ausgewählt wird, die aus wässrigen Melamin-Formaldehyd-Harzlösungen, wässrigen Melamin-Harnstoff-Formaldehyd-Harzlösungen, Mischungen davon und Mischungen davon mit wässrigen Harnstoff-Formaldehyd-Harzlösungen und/oder wässrigen Phenol-Formaldehyd-Harzlösungen besteht, wobei
die wässrige Harzlösung (A) einen Gesamtmelamingehalt von 20 bis 45 Gew.-%, vorzugsweise von 25 bis 35 Gew.-%, bezogen auf das Gesamtgewicht der wässrigen Harzlösung (A), aufweist,
der Säure-Donor (b) aus der Gruppe ausgewählt wird, die aus Ammoniumpolyphosphat, Guanylharnstoffphosphat, Guanidinphosphat und Mischungen davon besteht,
der Kohlenstoff-Donor (c) aus der Gruppe ausgewählt wird, die aus Glucose, Arabinose und anderen Monosacchariden, Lactose, Maltose und anderen Disacchariden, Stärke, Cellulose, Dextrin und anderen Polysacchariden, Sorbitol, Erythritol, Pentaerythritol, Dipentaerythritol, Tripentaerythritol, Mannitol oder anderen polyhydrischen Alkoholen und Mischungen davon besteht,
das Masseverhältnis von Säure-Donor (b) zu Kohlenstoff-Donor (c), (b):(c), die in die wässrige Harzlösung (A) eingebracht werden, in einem Bereich von 10:1 bis 1:1, vorzugsweise von 8:1 bis 1:1 und bevorzugter von 6:1 bis 1:1, liegt, und
der Säure-Donor (b) und der Kohlenstoff-Donor (c) in die wässrige Harzlösung (A) in einer solchen Menge eingebracht werden, dass ein Masseverhältnis des Feststoffgehalts (a_{A}) der wässrigen Harzlösung (A), bestimmt gemäß DIN 53216, zur Gesamtmenge des Säure-Donors (b) und Kohlenstoff-Donors (c), (a_{A}):((b)+(c)), in einem Bereich von 0,25:1 bis 5:1, vorzugsweise von 0,30:1 bis 2,5:1, liegt,
die wässrige intumeszente Zusammensetzung (C) einen Feststoffgehalt (ac) von 50 bis 80 Gew.-%, vorzugsweise von 60 bis 75 Gew.-%, bezogen auf das Gesamtgewicht der wässrigen intumeszenten Zusammensetzung (C), aufweist,
(2) einen Schritt (2B) des Laminierens einer oder mehrerer Schichten eines intumeszenten Trägers und eines Dekorpapier auf das Material auf Holz- oder Cellulosebasis in der genannten Reihenfolge,
wobei der intumeszente Träger ein Vlies, bestehend aus Glas- oder anderen Fasern, umfasst, das einer Beschichtung mit der wässrigen intumeszenten Zusammensetzung (C) unterzogen wurde.

2. Verfahren nach Anspruch 1, wobei der Säure-Donor (b) und der Kohlenstoff-Donor (c) als partikelförmige Pulver in die wässrige Harzlösung (A) eingebracht werden und bei Bedarf ein Feststoffgehalt (ac) der wässrigen intumeszenten Zusammensetzung (C) durch das Zusetzen von Wasser derart justiert wird, dass er im Bereich von 50 bis 80 Gew.-%, vorzugsweise von 60 bis 75 Gew.-%, bezogen auf das Gesamtgewicht der wässrigen intumeszenten Zusammensetzung (C), liegt.

3. Verfahren nach Anspruch 1, wobei der Säure-Donor (b) und der Kohlenstoff-Donor (c) vor ihrer Einbringung in die wässrige Harzlösung (A) in Wasser dispergiert oder suspendiert werden, um eine wässrige flammhemmende Zusammensetzung (B) zu bilden, die insgesamt 40 bis 80 Gew.-%, vorzugsweise 45 bis 75 Gew.-% und bevorzugter 55 bis 70 Gew.-% des Säure-Donors (b) und des Kohlenstoff-Donors (c), bezogen auf das Gesamtgewicht der wässrigen flammhemmenden Zusammensetzung (B), umfasst.

4. Verfahren nach einem der Ansprüche 1-3, wobei die Gesamtmenge von Säure-Donor (b) und Kohlenstoff-Donor (c), mit der der intumeszente Träger beschichtet wird, in einem Bereich von 30 bis 200 g/m², bevorzugter in einem Bereich von 40 bis 150 g/m² und noch bevorzugter in einem Bereich von 60 bis 120 g/m², liegt.

5. Verfahren nach einem der Ansprüche 1 bis 4, wobei die wässrige Harzlösung (A) eine Mischung aus einer wässrigen Melamin-Formaldehyd-Harzlösung mit einer wässrigen Phenol-Formaldehyd-Harzlösung umfasst, wobei ein Masseverhältnis eines aus dem wässrigen Melamin-Formaldehyd-Harz abgeleiteten Feststoffgehalts (a_{MF}) zu einem aus dem wässrigen Phenol-Formaldehyd-Harz abgeleiteten Feststoffgehalt (a_{PF}) 2:1 bis 10:1, vorzugsweise 3:1 bis 9:1 und bevorzugter 4:1 bis 8:1, beträgt.

6. Verfahren nach einem der Ansprüche 1 bis 5, wobei der Säure-Donor (b) aus der Gruppe ausgewählt wird, die aus Ammoniumpolyphosphat und Guanidinphosphat besteht.

7. Verfahren nach einem der Ansprüche 1 bis 6, wobei der Kohlenstoff-Donor (c) aus der Gruppe ausgewählt wird, die aus Stärke, Cellulose, Dextrin und anderen Polysacchariden, Sorbitol, Erythritol, Pentaerythritol, Dipentaerythritol, Tripentaerythritol, Mannitol oder anderen polyhydrischen Alkoholen und Mischungen davon besteht, der Kohlenstoff-Donor (c) vorzugsweise aus der Gruppe ausgewählt wird, die aus Sorbitol, Erythritol, Pentaerythritol, Dipentaerythritol, Tripentaerythritol, Mannitol und Mischungen davon besteht.

8. Verfahren nach einem der Ansprüche 1 bis 7, wobei die wässrige Harzlösung (A) einen Feststoffgehalt (a_{A}) von 45 bis 75 Gew.-%, vorzugsweise von 50 bis 70 Gew.-% und bevorzugter von 55 bis 65 Gew.-%, bezogen auf das Gesamtgewicht der wässrigen Harzlösung (A), aufweist.

9. Verfahren nach einem der Ansprüche 1 bis 8, wobei das Material auf Holzbasis aus der Gruppe ausgewählt wird, die aus Schnittholz, Bauholz und Holzwerkstoff wie etwa Sperrholz, Pressholz, Faserplatte wie etwa mitteldichter Faserplatte (MDF) oder hochdichter Faserplatte (HDF), Spanplatte (Particle Board, PB), Grobspanplatte (Oriented Strand Board, OSB), Schichtholz, Furnierstreifenholz (Parallel Strand Lumber, PSL), Spanstreifenholz (Laminated Strand Lumber, LSL) und Oriented Strand Lumber (OSL), Brettschichtholz (Glulam), Furnierschichtholz (Laminated Veneer Lumber, LVL), Dämmplatte auf Holzbasis, Holz-Kunststoff-Verbundwerkstoffen besteht, und das Material auf Cellulosebasis aus der Gruppe ausgewählt wird, die aus einer Kompaktplatte (CB) oder einem Kompaktlaminat (CL) wie etwa einem Hochdrucklaminat (High Pressure Laminate, HPL) und einem CPL-Laminat (Continuous Pressure Laminate) besteht.

10. Intumeszenter Träger zum Laminieren auf eine Platte auf Holz- oder Naturfaserbasis, wobei der intumeszente Träger ein Vlies, bestehend aus Glas- oder anderen Fasern, umfasst, das einer Beschichtung mit einer intumeszenten Zusammensetzung unterzogen wurde, die einen Säure-Donor, einen Kohlebildner und ein Treibmittel umfasst, wobei das Vlies, bestehend aus Glas- oder anderen Fasern, einer Beschichtung mit einer wässrigen intumeszenten Zusammensetzung (C) unterzogen wurde, die Folgendes umfasst:
eine wässrige Harzlösung (A), die aus der Gruppe ausgewählt ist, die aus wässrigen Melamin-Formaldehyd-Harzlösungen, wässrigen Melamin-Harnstoff-Formaldehyd-Harzlösungen, Mischungen davon und Mischungen davon mit wässrigen Harnstoff-Formaldehyd-Harzlösungen und/oder wässrigen Phenol-Formaldehyd-Harzlösungen besteht,
einen Säure-Donor (b), der aus der Gruppe ausgewählt ist, die aus Ammoniumpolyphosphat, Guanylharnstoffphosphat, Guanidinphosphat und Mischungen davon besteht;
einen Kohlenstoff-Donor (c), der aus der Gruppe ausgewählt ist, die aus Glucose, Arabinose und anderen Monosacchariden, Lactose, Maltose und anderen Disacchariden, Stärke, Cellulose, Dextrin und anderen Polysacchariden, Sorbitol, Erythritol, Pentaerythritol, Dipentaerythritol, Tripentaerythritol, Mannitol oder anderen polyhydrischen Alkoholen und Mischungen davon besteht,
die wässrige Harzlösung (A) einen Gesamtmelamingehalt von 20 bis 45 Gew.-%, vorzugsweise von 25 bis 35 Gew.-%, bezogen auf das Gesamtgewicht der wässrigen Harzlösung (A), aufweist,
das Masseverhältnis von Säure-Donor (b) zu Kohlenstoff-Donor (c), (b):(c), die in die wässrige Harzlösung (A) eingebracht sind, in einem Bereich von 10:1 bis 1:1, vorzugsweise von 8:1 bis 1:1 und bevorzugter von 6:1 bis 1:1, liegt, und
der Säure-Donor (b) und der Kohlenstoff-Donor (c) in die wässrige Harzlösung (A) in einer solchen Menge eingebracht sind, dass ein Masseverhältnis des Feststoffgehalts (a_{A}) der wässrigen Harzlösung (A), bestimmt gemäß DIN 53216, zur Gesamtmenge des Säure-Donors (b) und Kohlenstoff-Donors (c), (a_{A}):((b)+(c)), in einem Bereich von 0,25:1 bis 5:1, vorzugsweise von 0,30:1 bis 2,5:1, liegt,
die wässrige intumeszente Zusammensetzung (C) einen Feststoffgehalt (ac) von 50 bis 80 Gew.-%, vorzugsweise von 60 bis 75 Gew.-%, bezogen auf das Gesamtgewicht der wässrigen intumeszenten Zusammensetzung (C), aufweist.

11. Intumeszenter Träger nach Anspruch 10, wobei die Menge der wässrigen intumeszenten Zusammensetzung (C), mit der das Vlies, bestehend aus Glas- oder anderen Fasern, beschichtet ist, im Bereich von 30 bis 200 g/m², vorzugsweise im Bereich von 40 bis 150 g/m² und bevorzugter im Bereich von 60 bis 120 g/m², hinsichtlich der Gesamtmenge des Säure-Donors (b) und des Kohlenstoff-Donors (c), liegt.

12. Flammhemmendes Produkt, umfassend eine Platte oder ein Paneel auf Holz- oder Naturfaserbasis, auf die/das ein intumeszenter Träger nach Anspruch 10 oder 11 und optional ein Dekorpapier laminiert wurden.

13. Flammhemmendes Produkt nach Anspruch 12, wobei die Platte oder das Paneel auf Holz- oder Naturfaserbasis aus der Gruppe ausgewählt ist, die aus Schnittholz, Bauholz und Holzwerkstoff wie etwa Sperrholz, Pressholz, Faserplatte wie etwa mitteldichter Faserplatte (MDF) oder hochdichter Faserplatte (HDF), Spanplatte (Particle Board, PB), Grobspanplatte (Oriented Strand Board, OSB), Schichtholz, Furnierstreifenholz (Parallel Strand Lumber, PSL), Spanstreifenholz (Laminated Strand Lumber, LSL) und Oriented Strand Lumber (OSL), Brettschichtholz (Glulam), Furnierschichtholz (Laminated Veneer Lumber, LVL), Kompaktplatte (CB) und Kompaktlaminat (CL) wie etwa einem Hochdrucklaminat (High Pressure Laminate, HPL) und einem CPL-Laminat (Continuous Pressure Laminate) besteht.

## Revendications

1. Procédé pour conférer un caractère ignifuge à un matériau à base de bois ou de cellulose qui peut être utilisé dans la production de meubles, la construction intérieure de bâtiments ou les finitions intérieures décoratives, le procédé comprenant les étapes (1) et (2) consistant à :
(1) introduire un donneur d'acide (b) et un donneur de carbone (c) dans une solution aqueuse de résine (A) pour obtenir une composition intumescente aqueuse (C), dans lequel
la solution aqueuse de résine (A) est choisie dans le groupe constitué par les solutions aqueuses de résine de mélamine-formaldéhyde, les solutions aqueuses de résine de mélamine-urée-formaldéhyde, leurs mélanges et leurs mélanges avec des solutions aqueuses de résine d'urée-formaldéhyde et/ou des solutions aqueuses de résine de phénol-formaldéhyde ; dans lequel
la solution aqueuse de résine (A) présente une teneur totale en mélamine de 20 à 45 % en poids, de préférence de 25 à 35 % en poids par rapport au poids total de la solution aqueuse de résine (A) ;
le donneur d'acide (b) est choisi dans le groupe constitué par le polyphosphate d'ammonium, le phosphate de guanylurée, le phosphate de guanidine et leurs mélanges ;
le donneur de carbone (c) est choisi dans le groupe constitué par le glucose, l'arabinose et d'autres monosaccharides, le lactose, le maltose et d'autres disaccharides, l'amidon, la cellulose, la dextrine et d'autres polysaccharides, le sorbitol, l'érythritol, le pentaérythritol, le dipentaérythritol, le tripentaérythritol, le mannitol ou d'autres alcools polyhydriques et leurs mélanges ;
le rapport de masse entre le donneur d'acide (b) et le donneur de carbone (c), (b):(c), introduits dans la solution aqueuse de résine (A) est compris entre 10:1 et 1:1, de préférence entre 8:1 et 1:1, et plus préférentiellement entre 6:1 et 1:1 ; et
le donneur d'acide (b) et le donneur de carbone (c) sont introduits dans la solution aqueuse de résine (A) en une quantité telle qu'un rapport de masse entre la teneur en solides (a_{A}) de la solution aqueuse de résine (A), déterminée selon la norme DIN 53216, et la quantité totale de donneur d'acide (b) et de donneur de carbone (c), (a_{A}):((b)+(c)), se situe dans la plage de 0,25:1 à 5:1, de préférence de 0,30:1 à 2,5:1 ;
la composition intumescente aqueuse (C) présente une teneur en solides (ac) de 50 à 80 % en poids, de préférence de 60 à 75 % en poids, par rapport au poids total de la composition intumescente aqueuse (C) ;
(2) une étape de stratification d'une ou plusieurs couches d'un support intumescent et d'un papier décoratif sur le matériau à base de bois ou de cellulose dans l'ordre indiqué,
dans lequel le support intumescent comprend un mat fait de fibres de verre ou d'autres fibres qui a été soumis à une enduction avec la composition intumescente aqueuse (C).

2. Procédé selon la revendication 1, dans lequel le donneur d'acide (b) et le donneur de carbone (c) sont introduits dans la solution aqueuse de résine (A) sous forme de poudres particulaires et, si nécessaire, une teneur en solides (ac) de la composition intumescente aqueuse (C) est ajustée par l'ajout d'eau de manière à se situer dans la plage de 50 à 80 % en poids, de préférence de 60 à 75 % en poids, par rapport au poids total de la composition intumescente aqueuse (C).

3. Procédé selon la revendication 1, dans lequel, avant leur introduction dans la solution aqueuse de résine (A), le donneur d'acide (b) et le donneur de carbone (c) sont dispersés ou suspendus dans de l'eau pour former une composition aqueuse ignifuge (B) comprenant, au total, de 40 à 80 % en poids, de préférence de 45 à 75 % en poids, et plus préférentiellement de 55 à 70 % en poids du donneur d'acide (b) et du donneur de carbone (c) par rapport au poids total de la composition aqueuse ignifuge (B).

4. Procédé selon l'une quelconque des revendications 1 à 3, dans lequel la quantité totale de donneur d'acide (b) et de donneur de carbone (c) appliquée sur le support intumescent est comprise dans une plage allant de 30 à 200 g/m², plus préférentiellement dans une plage allant de 40 à 150 g/m², et encore plus préférentiellement dans une plage allant de 60 à 120 g/m².

5. Procédé selon l'une quelconque des revendications 1 à 4, dans lequel la solution aqueuse de résine (A) comprend un mélange d'une solution aqueuse de résine de mélamine-formaldéhyde avec une solution aqueuse de résine de phénol-formaldéhyde, dans lequel un rapport de masse entre une teneur en solides (a_{MF}) dérivée de la résine aqueuse de mélamine-formaldéhyde et une teneur en solides (a_{PF}) dérivée de la résine aqueuse de phénol-formaldéhyde est de 2:1 à 10:1, de préférence de 3:1 à 9:1, et plus préférentiellement de 4:1 à 8:1.

6. Procédé selon l'une quelconque des revendications 1 à 5, dans lequel le donneur d'acide (b) est choisi dans le groupe constitué par le polyphosphate d'ammonium et le phosphate de guanidine.

7. Procédé selon l'une quelconque des revendications 1 à 6, dans lequel le donneur de carbone (c) est choisi dans le groupe constitué par l'amidon, la cellulose, la dextrine et d'autres polysaccharides, le sorbitol, l'érythritol, le pentaérythritol, le dipentaérythritol, le tripentaérythritol, le mannitol ou d'autres alcools polyhydriques et leurs mélanges, de préférence le donneur de carbone (c) est choisi dans le groupe constitué par le sorbitol, l'érythritol, le pentaérythritol, le dipentaérythritol, le tripentaérythritol, le mannitol et leurs mélanges.

8. Procédé selon l'une quelconque des revendications 1 à 7, dans lequel la solution aqueuse de résine (A) présente une teneur en solides (a_{A}) de 45 à 75 % en poids, de préférence de 50 à 70 % en poids, et plus préférentiellement de 55 à 65 % en poids par rapport au poids total de la solution aqueuse de résine (A).

9. Procédé selon l'une quelconque des revendications 1 à 8, dans lequel le matériau à base de bois est choisi dans le groupe constitué par le bois d'œuvre, le bois de construction et le bois d'ingénierie, tel que le contreplaqué, le bois densifié, les panneaux de fibres, tels que les panneaux de fibres à densité moyenne (MDF) ou les panneaux de fibres à haute densité (HDF), les panneaux de particules (PB), les panneaux à copeaux orientés (OSB), le bois lamellé, le bois à copeaux parallèles (PSL), le bois de longs copeaux lamellés (LSL) et le bois à copeaux orientés (OSL), le bois lamellé-collé (glulam), le bois en placage stratifié (LVL), les panneaux isolants à base de bois, les composites bois-plastique et le matériau à base de cellulose est choisi parmi un panneau compact (CB) ou un stratifié compact (CL), tel qu'un stratifié haute pression (HPL) et un stratifié à pression continue (CPL).

10. Support intumescent pour stratification sur un panneau à base de bois ou de fibres naturelles, ledit support intumescent comprenant un mat fait de fibres de verre ou d'autres fibres qui a été soumis à une enduction avec une composition intumescente comprenant une source d'acide, un agent de carbonisation et un agent gonflant, dans lequel le mat fait de fibres de verre ou d'autres fibres a été soumis à une enduction avec une composition intumescente aqueuse (C) comprenant :
une solution aqueuse de résine (A) choisie dans le groupe constitué par les solutions aqueuses de résine de mélamine-formaldéhyde, les solutions aqueuses de résine de mélamine-urée-formaldéhyde, leurs mélanges et leurs mélanges avec des solutions aqueuses de résine d'urée-formaldéhyde et/ou des solutions aqueuses de résine de phénol-formaldéhyde ;
un donneur d'acide (b) choisi dans le groupe constitué par le polyphosphate d'ammonium, le phosphate de guanylurée, le phosphate de guanidine et leurs mélanges ;
un donneur de carbone (c) choisi dans le groupe constitué par le glucose, l'arabinose et d'autres monosaccharides, le lactose, le maltose et d'autres disaccharides, l'amidon, la cellulose, la dextrine et d'autres polysaccharides, le sorbitol, l'érythritol, le pentaérythritol, le dipentaérythritol, le tripentaérythritol, le mannitol ou d'autres alcools polyhydriques et leurs mélanges ;
la solution aqueuse de résine (A) présente une teneur totale en mélamine de 20 à 45 % en poids, de préférence de 25 à 35 % en poids par rapport au poids total de la solution aqueuse de résine (A) ;
le rapport de masse entre le donneur d'acide (b) et le donneur de carbone (c), (b):(c), introduits dans la solution aqueuse de résine (A) est compris entre 10:1 et 1:1, de préférence entre 8:1 et 1:1, et plus préférentiellement entre 6:1 et 1:1 ; et
le donneur d'acide (b) et le donneur de carbone (c) sont inclus dans la solution aqueuse de résine (A) en une quantité telle qu'un rapport de masse entre la teneur en solides (a_{A}) de la solution aqueuse de résine (A), déterminée selon la norme DIN 53216, et la quantité totale de donneur d'acide (b) et de donneur de carbone (c), (a_{A}):((b)+(c)), se situe dans la plage de 0,25:1 à 5:1, de préférence de 0,30:1 à 2,5:1 ;
la composition intumescente aqueuse (C) présente une teneur en solides (ac) de 50 à 80 % en poids, de préférence de 60 à 75 % en poids, par rapport au poids total de la composition intumescente aqueuse (C).

11. Support intumescent selon la revendication 10, dans lequel la quantité de la composition intumescente aqueuse (C) appliquée sur le mat fait de fibres de verre ou d'autres fibres se situe dans la plage allant de 30 à 200 g/m², de préférence dans la plage allant de 40 à 150 g/m2, et plus préférentiellement dans la plage allant de 60 à 120 g/m2 en termes de quantité totale de donneur d'acide (b) et de donneur de carbone (c).

12. Produit ignifuge comprenant un panneau ou une planche à base de bois ou de fibres naturelles sur lequel un support intumescent tel que défini dans la revendication 10 ou 11 et éventuellement un papier décoratif ont été stratifiés.

13. Produit ignifuge selon la revendication 12, dans lequel le panneau ou la planche à base de bois ou de fibres naturelles est choisi dans le groupe constitué par le bois d'œuvre, le bois de construction et le bois d'ingénierie, tel que le contreplaqué, le bois densifié, les panneaux de fibres, tels que les panneaux de fibres à densité moyenne (MDF) ou les panneaux de fibres à haute densité (HDF), les panneaux de particules (PB), les panneaux à copeaux orientés (OSB), le bois lamellé, le bois à copeaux parallèles (PSL), le bois de longs copeaux lamellés (LSL) et le bois à copeaux orientés (OSL), le bois lamellé-collé (glulam), le bois en placage stratifié (LVL), les panneaux compacts (CB) et les stratifiés compacts (CL), tels qu'un stratifié haute pression (HPL) et un stratifié à pression continue (CPL).
